# NEUE EUROPÄISCHE PATENTSCHRIFT

(11) **EP 0 781 201 B2**
(45) Veröffentlichungstag und Bekanntmachung des Hinweises auf die Entscheidung über den Einspruch: **15.08.2012**
(45) Hinweis auf die Patenterteilung: 11.02.1998
(21) Anmeldenummer: 95928395.3
(22) Anmeldetag: 28.08.1995
(51) Int. Cl.: B32B 27/30

(54) **VERBUNDPLATTE**
COMPOSITE PANEL
PANNEAU COMPOSITE

(30) Priorität: 06.09.1994 AT 170494
(43) Veröffentlichungstag der Anmeldung: 02.07.1997
(73) Patentinhaber: Senoplast Klepsch & Co. GmbH, 5721 Piesendorf (AT)
(72) Erfinder: KLEPSCH, Wilhelm, 5710 Kaprun (AT)
(74) Vertreter: Schwarz & Partner
(86) Internationale Anmeldenummer: PCT/AT1995/000171
(87) Internationale Veröffentlichungsnummer: WO 1996/007541

(56) Entgegenhaltungen:
- EP-A- 0 225 500
- EP-A2- 0 225 500
- GB-A- 1 444 562
- JP-A- 03 030 945
- US-A- 4 731 213
- US-A- 4 936 936
- US-A- 5 318 737
- Questel-Orbit, file WPIL, Derwent accession no. 84-253368; & JP,A,59152854 (ASAHI CHEMICAL IND KK), 31 August 1984 (84.08.31)

## Beschreibung

Die Erfindung betrifft eine Verbundplatte, aus welcher durch Tiefziehen ein Einsatz für Sanitärgegenstände, insbesondere Badewannen, Duschtassen, Spülen, Waschbecken, herstellbar ist, wobei auf einer Unterlage insbesondere aus Acrylnitril-Butadien-Styrol (ABS), ein Überzug aus Polymethylmetacrylat (PMMA, Acrylglas) angeordnet ist.

Derzeit werden für diverse Einsätze für Sanitärgegenstände (Badewannen, Spülen, Duschtassen, Duschpanele) Kunststoffplatten aus gegossenem Acrylnitril bzw. Coextrusionsplatten aus ABS/PMMA eingesetzt.

Die europäische Norm EN 263 beschreibt genau die Anforderungen und Prüfmethoden, die eine Platte aus gegossenem Acryl für Badewannen und Duschwannen für den Hausgebrauch erfüllen muß.

Die in der EN 263 vorgeschriebenen Anforderungen (außer den allgemeinen Anforderungen an die gegossene Acrylplatte in Bezug auf den eingesetzten Rohstoff) wurden bisher von coextrudierten Platten aus ABS mit einem Überzug aus Polymethylmetacrylat (PMMA) nur teilweise erfüllt.

Die Anforderung laut Abschnitt 9 der Norm EN 263 "Beständigkeit gegenüber heißem Wasser" konnte bis jetzt von den coextrudierten ABS/PMMA-Platten nicht mit 100%iger Sicherheit erfüllt werden. Dazu kam die Erfahrung, daß der vorgeschriebene Test insofern nicht genügend wirklichkeitsnahe ist, als er den Einfluß der in manchen Ländern als Bestandteil von Putzmitteln zulässigen aggressiven Lösungsmittel auf die Beständigkeit von Kunststoffen gegenüber Heißwasser nicht berücksichtig. Deshalb hat die Anmelderin bei der Entwicklung coextrudierter ABS/PMMA-Platten für Sanitärgegenstände einen eigenen Test entwickelt, der bei Prüfung der coextrudierten Platten nach Punkt 9. der Norm EN 263 noch zusätzlich einen Reinigungsvorgang mit handelsüblichen, aggressiven Putzmitteln zwischen den einzelnen Zyklen vorsieht.

Die gegenständliche Erfindung geht von der Erkenntnis aus, daß dieser Test nur dann bestanden werden kann, wenn eine ausreichend hohe chemische Beständigkeit und Heiß/Kaltwasserbeständigkeit beim Überzug aus Potymethylmetacrylat vorhanden ist.

Bekannt ist weiters, daß diese Anforderungen umso besser von der PMMA-Deckschicht erfüllt werden können, wenn das Molekulargewicht des eingesetzten Rohstoffs möglichst hoch bzw. der Schmelzindex (MFI = Melt flow index) möglichst niedrig ist. Die EP-B1-225500 der Anmelderin beschreibt Verbundplatten aus ABS und einem Überzug aus PMMA zur Herstellung von tiefgezogenen Badewanneneinsätzen, die durch eine Breitschlitzdüse coextrudiert werden und dadurch gekennzeichnet sind, daß das den Überzug bildende Acrylglas einen Schmelzindex MFI 230 C/3,8 (nach DIN 53735) von höchstens 2g/10' aufweist. Es hat sich gezeigt, daß dies nicht in allen Fällen ausreicht, um den oben genannten Test zu bestehen.

Weiters beschreibt die EP-B1-304679 eine Möglichkeit zur Verbesserung der Heiß-Kaltwasserbeständigkeit sowie Spannungsrißbeständigkeit bei Verbundplatten aus ABS und PMMA, wobei auf einer Unterlage aus ABS ein Überzug aus PMMA angeordnet ist, der mit einer zusätzlichen Deckschicht versehen ist, welche aus 30 bis 70 Gewichtsprozent PVDF (Polyvinylidenfluoid) und Rest-PMMA, besteht. Mit diesen Platten konnten die in der EN 263 oben angeführten Anforderungen an gegossene Acrylplatten für Badewannen und Duschtassen für den Hausgebrauch bereits im wesentlichen erfüllt werden. Die Spannungsrißbeständigkeit gegen Alkohole im speziellen gegen Methanol sowie bei Prüfung nach Punkt 9 EN 263 mit zusätzlichem Reinigungsvorgang wurde jedoch als noch nicht ausreichend beurteilt.

Aufgabe der Erfindung ist es, eine Verbundplatte der eingangs genannten Gattung zu schaffen, die sich durch eine verbesserte Heiß-Kalt-Wasserbestandigkeft, sowie eine Spannungsrißbeständigkeit gegen in Putzmitteln enthaltene Chemikalien, insbesondere Alkohol auszeichnet. Erfindungsgemäß wird dies dadurch erreicht, daß der Überzug aus Acrylglas aus einer Mischung von schlagzähmodifiziertem PMMA und Standard-PMMA besteht. Unter Standard-PMMA werden Homo-Polymethylmethacrylate verstanden. Unter schlagzähmodifiziertem PMMA werden vor allem Copolymere (Legierungen) von Methylmethacrylat mit weniger als 30% (Masse%), vorzugsweise weniger als 10%, anderen Acrylaten (insbesondere Butylacrylat, Äthylacrylat oder Methylacrylat) verstanden.

Aus Untersuchungen der Anmelderin geht hervor, daß die Spannungsrißbeständigkeit insbesondere gegen Alkohole bei PMMA umso besser wird, je geringer der Elastizitätsmodul (E-Modul) und je niedriger der MFI (Schmelzindex) ist. Im Regelfall kann diese Aufgabe sehr gut durch schlagzähmodifizierte hochmolekulare PMMA-Typen (kleine Schmelzindizes im Regelfall unter 2.0g/10' bei 230°C/3,8 nach DIN 53753) gelöst werden.

Der Nachteil dieser schlagzähmodifizierten PMMA-Typen besteht jedoch darin, daß sie eine, im Vergleich zu nicht schlagzähmodifiziertem PMMA geringe Kratzfestigkeit aufweisen und bei längerer Heiβwasserlagerung eine Trübung ("harze") in der PMMA-Schicht entsteht. Aus diesem Grund konnten bis jetzt hochmolekulare, schlagzähmodifizierte PMMA-Typen nicht bei Coextrusionsplatten aus ABS mit PMMA für nachfolgende Herstellung von Badewannen- und Duschwanneneinsätzen angewandt werden.

Die Grundidee der Erfindung bsteht nun darin, durch eine gezielte Abmischung von hochmolekularem (niedriger MFI) PMMA mit hochmolekularem schlagzähmodifiziertem PMMA als Deckschicht bei Verbundplatten mit einem Überzug aus PMMA zu einer wesentlichen Verbesserung der Heiß-Kalt-Wasser-Beständigkeit, chemischen Spannungsrißbeständigkeit bei gleichzeitig unverminderter Kratzfestigkeit zu gelangen.

Während eine Mischung von schlagzähmodffiziertem PMMA mit Standard PMMA die gewünschten Eigenschaften grundsätzlich verbessern kann, haben von der Anmelderin durchgeführte Mischungsversuche gezeigt, daß nur ein relativ geringer Bereich der möglichen Mischungen höchste Anforderungen (insbesondere Norm EN 263 mit zusätzlicher Reinigung durch aggressive, handelsübliche Putzmittel) hinsichtlich Heiß-Kalt-Wasser-Beständigkeit und chemischer Spannungsrißbeständigkeit erfüllt. Dieser geringe Bereich wird durch den Schmelzindex und/oder den E-Modul der Mischungen aus schlagzähmodifiziertem PMMA mit Standard-PMMA am besten beschrieben, nämlich MFI unter 0,8 und E-Modul zwischen 2500 und 2800 MPa.

Aufgrund der vorliegenden Ergebnisse werden höchste Heiß-Kalt-Wasserbeständigkeit und Spannungsrißbeständigkeit (insbesondere gegen Alkohole) durch Mischungen von schlagzähmodifiziertem PMMA mit Standard-PMMA erreicht, die einen MFI 230°C/3,8 nach DIN 53753 von höchstens 0,8 und gleichzeitig einen E-Modul (gemäß ISO 527) von 2500 bis 2800 MPa aufweisen.

Eine erfindungsgemäße Verbundplatte kann beispielsweise aus einer tragenden Platte 1 von mehreren Millimetern Stärke bestehen, welche aus gegebenenfalls mit PMMA vermischtem ABS besteht. Als nächste Schicht 2 ist eine ca. 10 - 20%ige (bezogen auf die Gesamtstärke) dicke Lage von ABS vorgesehen, welche die farbliche Unterlage für einen Überzug 3 aus Acrylglas (PMMA) mit einer Stärke von 1 - 30 % (bezogen auf die Gesamtstärke) bildet. Die Verbundplatte läßt sich beispielsweise durch Koextrusion der Schichten in einer Breitschlitzdüse herstellen.

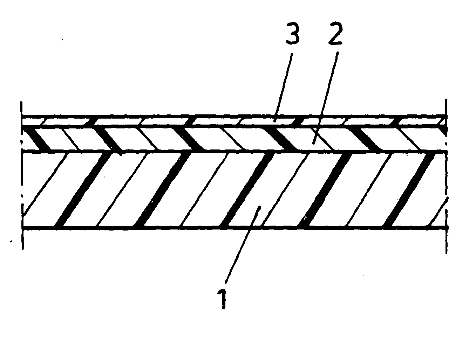

## Patentansprüche

1. Verbundplatte zum Herstellen eines Einsatzes für Sanitärgegenstände (Badewannen, Duschtassen, Spülen, Waschbecken) durch Tiefziehen, wobei auf einer Unterlage insbesondere aus Acrylnitril-Butadien-Styrol (ABS) ein Überzug (3) aus Polymethylmetacrylat (PMMA, Acrylglas) angeordnet ist, **dadurch gekennzeichnet, daß** der Überzug aus Acrylglas aus einer Mischung von schlagzähmodifiziertem PMMA und Standard-PMMA besteht, wobei der E-Modul der im Überzug (3) eingesetzten Mischung 2 500 bis 2 800 MPa beträgt.

2. Verbundplatte nach Anspruch 1, **dadurch gekennzeichnet, daß** der MFI der Mischung 230°C/3,8 nach DIN 53735 unter 0,8 g/10' liegt.

3. Verbundplatte nach Anspruch 1 oder 2, **dadurch gekennzeichnet, daß** das schlagzähmodifizierte PMMA ein Copolymer von Methylmethacrylat und weniger als 30 % (Masse %), vorzugsweise weniger als 10 % Acrylat ist.

4. Verbundplatte nach Anspruch 3, **dadurch gekennzeichnet, daß** als Acrylat Butylacrylat, Äthylacrylat oder Methylacrylat verwendet wird.

## Claims

1. Composite plate for the manufacture of an insert for sanitary articles (baths tubs, shower bases, flush bowles, wash basins) by deep-drawing, wherein a coating (3) of polymethyl methacrylate (PMMA, acrylic glass) is arranged on a support, in particular of acrylonitrile-buatiden-syrene (ABS), **characterised in that** the coating of acrylic glass comprises a mixture of impact toughness modified PMMA and standard PMMA, wherein the modululs of elasticity of the mixture used in the coating (3) is from 2500 to 2800 MPa.

2. Composite plate according to claim 1, **characterized in that** the MFI of the mixture 230 °C / 3.8 in accordance with DIN 53735 is below 0,8 g/10'.

3. Composite plate according to claim 1 or 2, **characterized in that** the impact toghness-modified PMMA is a copolymer of methyl methacrylate and less than 30% (percent by mass) and preferably less than 10% acrylate.

4. Composite plate according to claim 3, **characterized in that** butyl acrylate, ethyl acrylate or methyl acrylate is used as the acrylate.

## Revendications

1. Panneau composite, à partir duquel il est possible de réaliser par emboutissage un plateau pour éléments sanitaires (baignoire, bac de douche, évier, lavabo), un revêtement (3) en polyméthacrylate de méthyle (PMMA, verre acrylique) étant déposé sur une couche de base, réalisée en particulier en acrylonitrile-styrène-butadiène (ABS), **caractérisé en ce que** ledit revêtement en verre acrylique est constitué par un mélange de PMMA modifié à résistance élevée aux chocs et de PMMA standard, le module d'élasticité du mélange qui est utilisé pour constituer ledit revêtement étant de 2500 à 2800 MPa.

2. Panneau composite selon la revendication 1, **caractérisé en ce que** l'indice de fusion du mélange (MFI) 230°C/3,8 selon DIN 53735 est inférieur à 0,8 g/10'.

3. Panneau composite selon la revendication 1 ou 2, **caractérisé en ce que** le PMMA modifié à résistance élevée aux chocs est un copolymère de méthacrylate de méthyle et de moins de 30 % (% en masse), de préférence moins de 10 % d'acrylate.

4. Panneau composite selon la revendication 3, **caractérisé en ce que** l'acrylate utilisé est un acrylate de butyle, un acrylate d'éthyle ou un acrylate de méthyle.
